# EUROPEAN PATENT APPLICATION

(11) **EP 2 159 879 A1**
(43) Date of publication of application: **03.03.2010**
(21) Application number: 09168743.4
(22) Date of filing: 26.08.2009
(51) Int. Cl.: H01R 3/00

(54) **Measurement connector**

(30) Priority: 26.08.2008 US 91793 P
(71) Applicant: Omega Engineering, Inc., Stamford, CT 06907-0047 (US)
(72) Inventor: Hollander, Milton B., Stamford, CT 06906 (US)
(74) Representative: Marconnet, Sébastien

(57) **Abstract**

A connector includes a connector body, a sensor mounted to the connector body, and a connector interface configured to connect to an external device.

## Description

This application claims the benefit of U.S. Provisional Application No. 61/091,793 filed 26 August 2008, which is incorporated by reference herein in its entirety.

The disclosed embodiments generally relate to a connector, whether single conductor or multiple conductor, and generally intended for use as single connector item, e.g. for making a separable connection to a piece of electronic apparatus.

### BACKGROUND

Certain test and measurement device may generally include a sensor with a cable terminated with a connector. The connector in turn may be connected to an instrument. Connections between the sensor and cable and between the cable and connector are generally subject to wear and may become intermittent. In handheld applications, measurements may require the use of both hands, one to apply the sensor and another to hold the instrument. In addition, the cable connecting the sensor and connector may cause susceptibility to noise. It would be advantageous to have an integrated measurement device that plugs into a readout.

### SUMMARY

A non-limiting exemplary embodiment comprises a connector having a connector body, a sensor mounted to the connector body, and a connector interface configured to connect to an external device.

Another non-limiting exemplary embodiment comprises a direct contact measurement device having a connector body, a sensor mounted to the connector body and positioned to measure characteristics of a surface in contact with the connector body, and a connector interface configured to connect to an external device.

### BRIEF DESCRIPTION OF THE DRAWINGS

The foregoing aspects and other features of the presently disclosed embodiments are explained in the following description, taken in connection with the accompanying drawings, wherein:

Figure 1 shows a schematic diagram of a connector suitable for practicing the disclosed embodiments;

Figure 2 shows a schematic diagram of another connector suitable for practicing the disclosed embodiments;

Figure 3 shows a connector embodiment having a wireless interface;

Figures 4 and 5A-5D show additional connector embodiments;

Figure 6 shows an exemplary connector plugged into an external device; and

Figures 7A-7B schematically illustrate exemplary embodiments of circuitry within the connector.

### DETAILED DESCRIPTION

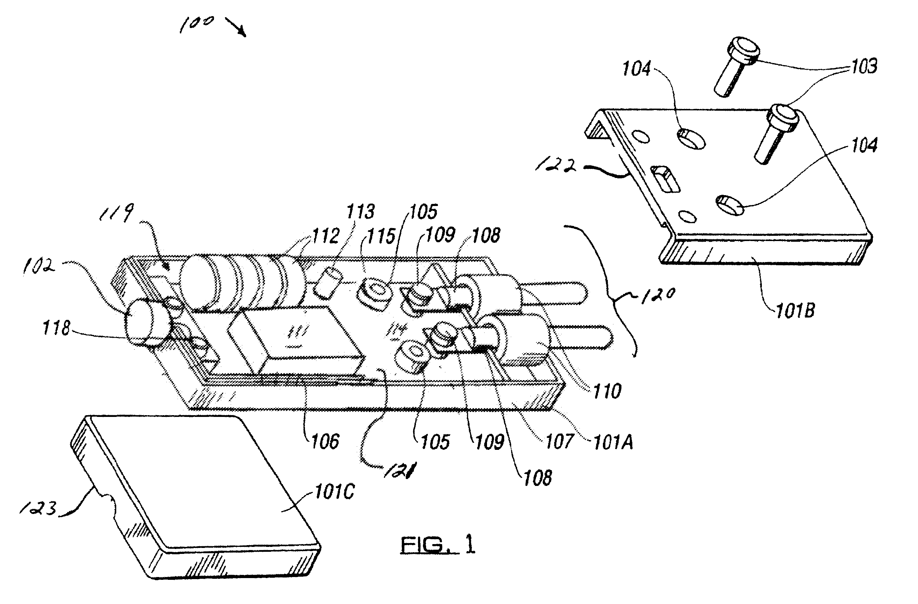

Figure 1 shows a schematic diagram of a connector 100 according to the embodiments disclosed herein. Although the presently disclosed embodiments will be described with reference to the drawings, it should be understood that they may be embodied in many alternate forms. It should also be understood that In addition, any suitable size, shape or type of elements or materials could be used.

The connector 100 generally includes a measurement sensor 102, a connector body 101A-101C, and a connector interface 120.

Measurement sensor 102 may be one or more of any sensor capable of converting a measurable characteristic to a signal. For example, sensor 102 may include, without limitation, one or more of a pressure, temperature, humidity, gas, pH, infrared, ultraviolet, visible light, voltage, current, power, conductivity, strain, load or acceleration measurement device. While a number of examples of suitable sensors are listed herein, the type of sensor is not limited to the types mentioned. The sensor may be made of any suitable material, for example, metal, ceramic, plastic, etc.

In Figure 1, the connector body may include a base 101A, a first cover portion 101B, and a second cover portion 101C. The cover portion 101B may be secured in position on the base 101A by two screws 103 which pass through holes 104 in the cover portion 101B and engage threaded bosses 105 of the base 101A. The cover portion 101C may be secured on the base 101A by any conventional fastening technique, for example by making a sliding fit on side wall ribbing 106 which may be appropriately undercut. One or more of base 101A, first cover portion 101B, and second cover portion 101C may be treated or coated to provide an electromagnetic shield. In some embodiments, the measurement sensor 102 may be mounted on the exterior of the connector 100. In other embodiments, the measurement sensor 102 may be mounted in the interior 119 of the connector 100, or on an interior surface of the connector 100, for example, an interior surface 121 of the base 101A, an interior surface 122 of first cover portion 101B, or an interior surface 123 of second cover portion 101C. In some embodiments, the sensor 102 may be positioned to measure characteristics of a surface in contact with the connector body 101A-101C.

The base 101A may have an encircling wall 107 which may be cut away (not shown) at the right-hand in this figure to permit access to one or more male pins 108 mounted on respective terminal posts 109 secured on the base 101A. In this embodiment, the one or more male pins serve as the connector interface 120. The connector interface 120 may include any suitable interface capable of providing a connection to an external device. For example, the connector interface 120 may include one or more male or female connectors, terminal posts, or any type of wired or wireless interface.

In the embodiment shown in Figure 1, each male plug pin 108 may optionally be surrounded by a respective ferrite sleeve 110 to provide shielding from stray electromagnetic energy. In examples where there are two or more male pins 108, the male pins may have the same size or different sizes, may be made of the same material or different materials, and may include any combination of sizes and materials.

Within the base 101A there may optionally be provided appropriate circuitry 111 for interfacing with an external device, including for example, any one or combination of connection, compensation, linearization, other signal conditioning, communication or any other circuitry suitable for providing the interface 120. Circuitry 111 may include a battery 112 for supplying power and a 'battery status' indicator (LED) 113. One or more components of the circuitry 111 may be mounted on a printed circuit board 114.

In some embodiments, sensor 102 may be connected to terminals 118 mounted on circuit board 114, while in other embodiments, sensor 102 may be mounted directly to printed circuit board 114. In other embodiments, for example, those without circuitry or components in connector 100, the sensor may be directly connected to interface 120, for example, terminal posts 109 or one or more male plug pins 108.

Because the sensor is mounted to the connector, the disclosed embodiments provide an integrated connector assembly that avoids the use of external cabling between the sensor and the connector. The disclosed connector assembly may generally be coupled directly to an external device and may allow a user to perform one handed measurements. For example, the connector may be self supporting on a handheld external device, or attached to a handheld device that provides a human detectable indication of the sensor output. The handheld device in combination with the connector may provide a measurement device that is operable using a single hand.

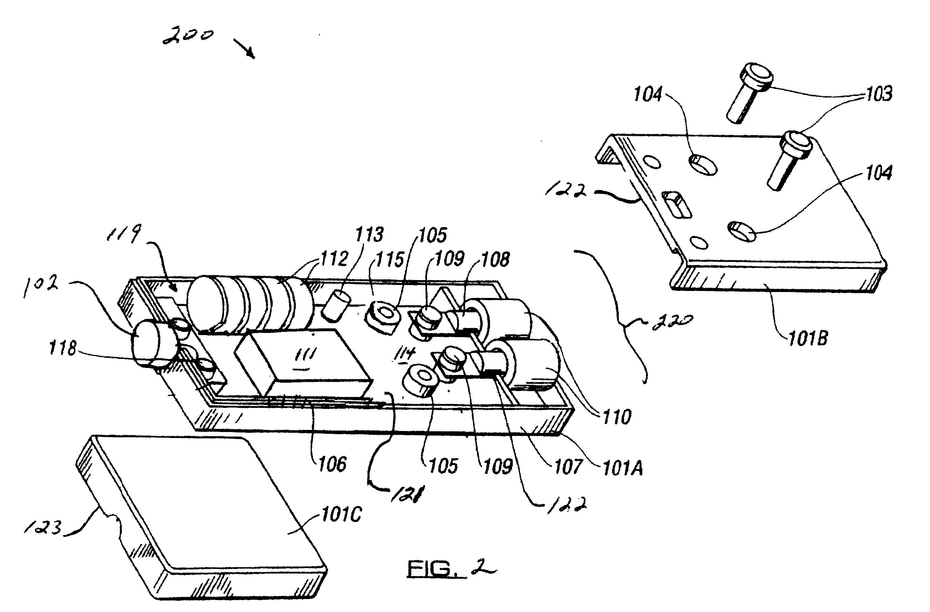

Figure 2 shows a connector 200 similar to connector 100, having a sensor 102 and a connector interface 220. In this embodiment, the base 101A may have an encircling wall 107 which is cut away (not shown) at the right-hand in Figure 2 to permit access to one or more female sockets 122 serving as the interface 220 to an external device. In examples where there are two or more female sockets 122, the female sockets may have the same size or different sizes, may be made of the same material or different materials, and may include any combination of sizes and materials.

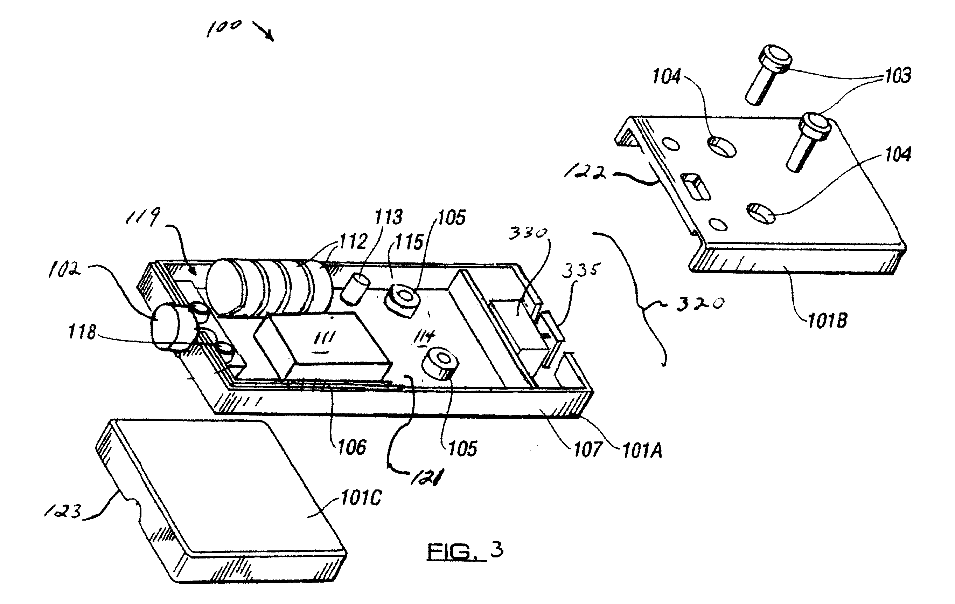

Figure 3 shows a connector 300 similar to connectors 100, 200. In this embodiment, interface 320 is a wireless interface. In this embodiment, wireless interface 320 may include communication circuitry 330, and an emitting receiving device 335. In some embodiments, the use of a wireless interface may facilitate hand held operation by allowing the connector 300 to be in contract with a surface or environment to be measured, while communicating with a remote handheld device.

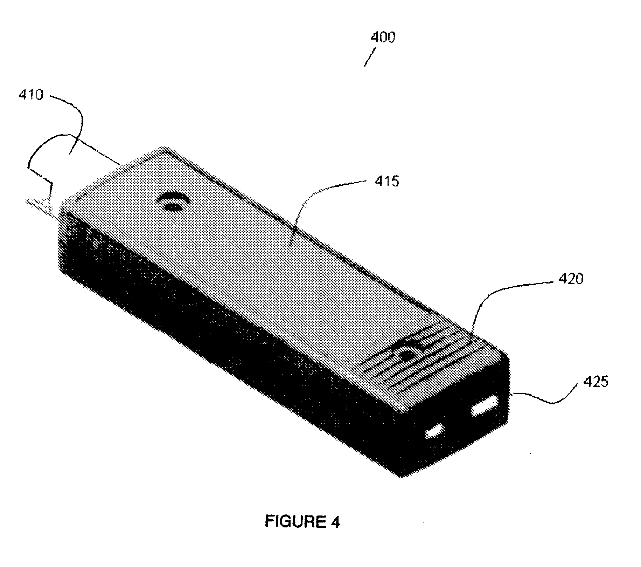

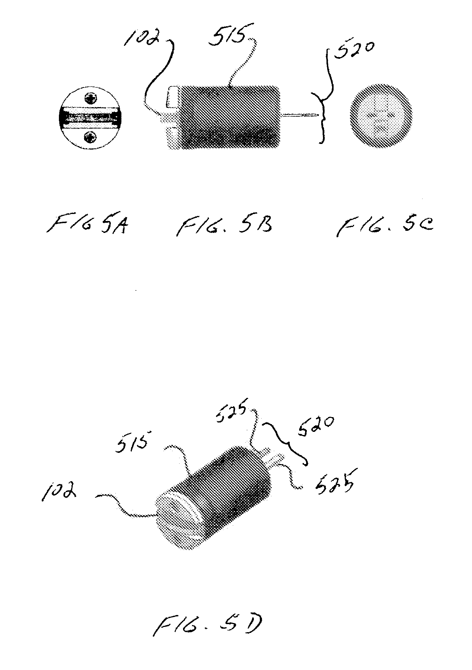

Figure 4 shows a connector embodiment having a connector body that may be constructed from one piece. Figure 4 shows a connector 400 that may include the sensor 102, a connector body 415 and an interface 420 to an external device. The connector body may be constructed of a single piece of material to which the sensor 102 and interface 420 are attached. Circuitry 111 may be included within connector 400. In the embodiment of Figure 4, the interface 420 may include one or more female sockets 425. Similar to other embodiments, in examples where there are two or more female sockets 425, the female sockets may have the same size or different sizes, may be made of the same material or different materials, and may include any combination of sizes and materials. While the interface 420 as shown includes female sockets, it should be understood that the interface 420 may alternately include one or more female sockets, male pins, a wireless interface in any combination, or any other suitable interface. Figures 5A-5D different views of a connector 500 that may include the sensor 102, a connector body 515 and an interface 520 to an external device. The connector body 515 may have a tubular construction. The connector body 515 may be constructed of modular components similar to connectors 100, 200, 300, or may be constructed of a single piece of material to which the sensor 102 and interface 520 are attached. The interface 520 may include one or more male pins 525. While the interface 520 as shown includes male pins 525, it should be understood that the interface 420 may alternately include one or more female sockets, male pins, a wireless interface in any combination, or any other suitable interface. Similar to other embodiments, in examples where there are two or more male pins or female sockets, the male pins or female sockets may have the same size or different sizes, may be made of the same material or different materials, and may include any combination of sizes and materials.

Each of the embodiments of Figures 4 and 5 may include circuitry, components, and connections similar to the embodiments shown in Figures 1 and 2, or a subset of the circuitry, components, and connections shown in Figures 1 and 2. Figures 4 and 5 may also include embodiments with the sensor 410, 510 connected directly to the interface 420, 520, respectively.

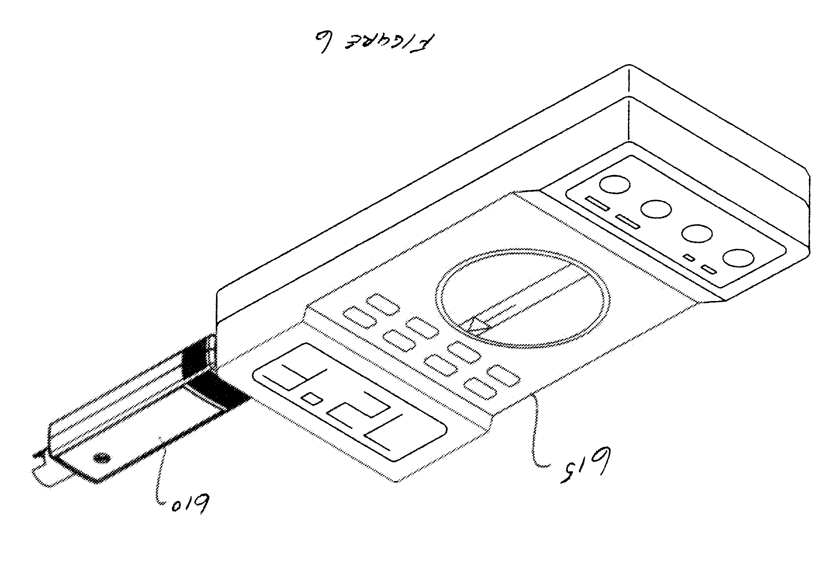

Figure 6 shows an exemplary connector 610, according to the disclosed embodiments, plugged into an external device 615. In this example, the connector 610 may be a surface temperature measurement device and the external device 615 may be a temperature meter.

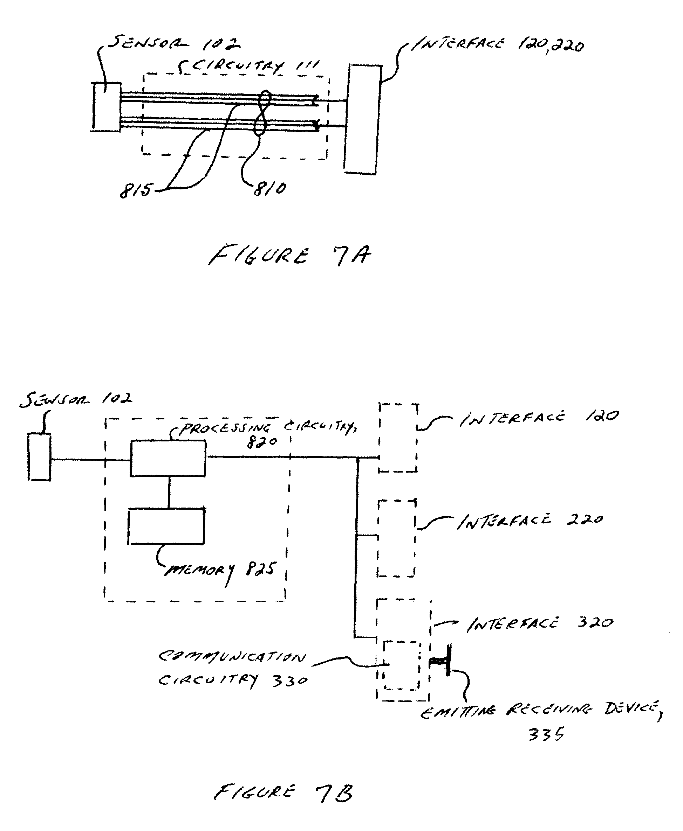

Figures 7A-7B schematically illustrate exemplary embodiments of circuitry 111. Circuitry 111 may include any suitable components configured to convey a signal from sensor 102 to connector interface 120, 220, 320. In Figure 8A, circuitry 111 may provide a direct connection 810 between sensor 102 and interface 120, 220. In this embodiment, the direct connection 810 may include shielding 815 to enhance noise immunity.

Figure 7B shows an exemplary embodiment of circuitry 111 that may include processing circuitry 820, for example, a microprocessor, signal conditioner, or signal processor. This embodiment may include one or more of interface 120, 220 or wireless interface 320. Processing circuitry 820 may be implemented using hardware components, one or more processors running one or more programs, or a combination of both and may be re-programmable to perform any suitable processing operations. Circuitry 111 may also include a computer-readable medium encoded with one or more a computer programs, for example memory 825. Processing circuitry 820 may operate under control of the one or more computer programs in accordance with the disclosed embodiments.

Still referring to Figure 7B, as mentioned above, wireless interface 320 may include communication circuitry 330, and an emitting receiving device 335. Communication circuitry 330 may operate to transmit signals provided by the sensor 102 or signals output by the processing circuitry 820. In some embodiments, communication circuitry 330 may be capable only of transmitting signals. In other embodiments, communication circuitry 330 may include transceiver circuitry capable of two-way communication, that is, both transmitting information and receiving information. Communication circuitry 330 may be capable of receiving commands from a remote device and optionally in combination with processing circuitry 820 performing the received commands or operations based on the received commands. Communication circuitry 330 may also alter processing or communication operations based on the received commands. In addition, communication circuitry 330 optionally in combination with processing circuitry 820 may be capable of transmitting commands for controlling an external device communicating with connector 300.

Communication circuitry 330 may provide wireless communication using any of a variety of different physical and protocol layer communication methods. For example, the communication technology may include optical, infrared, radio transmission, RFID, or any other suitable communication technology, and may incorporate IrDA, IEEE 802.11, 802.15, Bluetooth, PCS or any other suitable communication method or standard. The ZigBee^{™} standard, based on IEEE 802.15 may also be utilized because of its low power requirements, built in recognition capabilities, high reliability and relatively small packaging size. In an exemplary embodiment communication circuitry 330 may be a ZigBee end device. In other exemplary embodiments communication circuitry 330 may be a ZigBee coordinator or a ZigBee router. In accordance with the disclosed embodiments, the emitting receiving device 335 may be any device suitable for emitting or receiving signals, for example, an antenna, an optical emitter or an optical receiver.

While cover 101 B in Figures 1, 2, and 3 is shown being fastened with screws, it should be understood that base 101 A, first cover portion 101B, and second cover portion 101C may be fastened together using any suitable mechanism or technique, or any combination of mechanisms or techniques. In addition, sensors 410, 510, and interfaces 420, 520 may mounted to or within one piece connector bodies 415, 515 using any suitable mechanism or technique. Furthermore, one piece connector bodies 415, 515 may be constructed using any suitable technique, for example by stamping, machining, milling, molding, etc.

In exemplary embodiments, when assembled, connectors 100, 200, 300, 400, 500, 610 may have a form factor similar to a standard, standard ceramic, miniature, miniature ceramic thermocouple connector body, or any other suitable form factor. While connectors 100, 200, 300, 400, 500, 610 are shown as having a particular size and shape, it should be understood that they may have any suitable size and shape, and may be made of any suitable materials.

Connectors 200 and 400 may be universal connectors, that is, they may provide dual female socketing for both standard and miniature connectors. Connectors 200, 400 may also include circular sockets for standard connectors where one socket may be of slightly greater size for polarization purposes. For example, sockets 122, 425 may include arcuate or substantially circular metallic contacts to effect contact with male circular plug elements of a standard connector, and may also include a pair of more closely spaced narrow slots for reception of miniature-type connector blades. The slots may include leaf or like metallic contacts for appropriate electrical contact. In some embodiments, the slots may be positioned within or so as to intersect the circular apertures, while in other embodiments the slots may be positioned apart from the circular apertures.

Connectors 100, 200, 300, 400, 500, 610 may be designed or configured to connect to a suitable external device, for example, external device 615. External device 615 may be embodied as, without limitation, a permanently mounted, desk top, portable, or handheld device. Exemplary external devices may include an instrument, meter, indicator, readout or any other suitable device for providing equipment. The external device may include receiving, signal processing, or conditioning circuitry for receiving signals from connectors 100, 200, 300, 400, 500, 610. The receiving, signal processing, or conditioning circuitry may include any suitable circuitry for converting the signals from the connector to a usable form, for example, to a human readable form or to a data processing format. In some embodiments, the external device may include any device having a signal input, for example, a thermocouple input. In some embodiments, the connectors 100, 200, 400, 500, 610 may plug directly into the external device.

Connectors 100, 200, 300, 400, 500, 610 may be configured as direct contact measurement devices, for example, devices that measure a characteristic when in direct contact with a surface or environment having the characteristic to be measured. For example, connectors 100, 200, 300, 400, 500, 610 may be configured as surface temperature measurement devices, surface vibration measurement devices, or any other suitable type of contact measurement device.

In embodiments where the external device is handheld, the connectors 100, 200, 300, 400, 500 may permit measurements to be made using only one hand. As mentioned above, because the sensor and interface The disclosed connector assembly may generally be coupled directly to an external device, the external device in combination with the connector may provide a measurement device that is operable using a single hand.

The connectors 100, 200, 300, 400, 500, 600 may also provide for a more compact and portable measuring device. The connector configuration may also provide noise immunity, for example, by eliminating interconnecting cables between the sensor 102, 202, 302, 410, 510, 610 and the interface 120, 220, 320, 420, 520, 620, and also by providing a relatively short connection between the sensor and the interface, and by providing shielding within the connector body or around the connection between the sensor and the interface.

It should be understood that the foregoing description is only illustrative of the present embodiments. Various alternatives and modifications can be devised by those skilled in the art without departing from the embodiments disclosed herein. Accordingly, the embodiments are intended to embrace all such alternatives, modifications and variances which fall within the scope of the appended claims.

The disclosed embodiments include a surface temperature measurement device that plugs into a hand held readout.

## Claims

1. A connector comprising:
a connector body;
a sensor mounted to the connector body; and
a connector interface configured to connect to an external device.

2. The connector of claim 1, wherein the connector body comprises multiple pieces.

3. The connector of claim 1, wherein the connector body comprises a single piece.

4. The connector of claim 1, wherein the connector interface is configured to plug into a hand held external device to effect one handed measurements.

5. The connector of claim 1, wherein the sensor comprises a temperature measurement sensor and the connector interface is configured to plug into a hand held readout.

6. The connector of claim 1, wherein the connector interface comprises one or more male pins.

7. The connector of claim 1, wherein the connector interface comprises one or more female sockets

8. The connector of claim 1, wherein the connector interface comprises a wireless interface

9. The connector of claim 1, wherein the connector further comprises circuitry configured for one or more of compensation, linearization, or signal conditioning of signals from the sensor.

10. A direct contact measurement device comprising:
a connector body;
a sensor mounted to the connector body and positioned to measure characteristics of a surface in contact with the connector body; and
a connector interface configured to connect to an external device.

11. The direct contact measurement device of claim 10, wherein the connector body comprises a single piece.

12. The direct contact measurement device of claim 10, wherein the connector body comprises an electromagnetic shield.

13. The direct contact measurement device of claim 10, wherein the connector interface is configured to plug into a hand held external device to effect one handed measurements.

14. The direct contact measurement device of claim 10, wherein the sensor comprises a temperature measurement sensor and the connector interface is configured to plug into a hand held readout.

15. The direct contact measurement device of claim 10, wherein the connector interface comprises one or more male pins.

16. The direct contact measurement device of claim 10, wherein the connector interface comprises one or more female sockets.

17. The direct contact measurement device of claim 10, wherein the connector interface comprises a wireless interface.

18. The direct contact measurement device of claim 10, wherein the connector further comprises circuitry configured for one or more of compensation, linearization, or signal conditioning of signals from the sensor.

19. A connector comprising:
a connector body;
a sensor mounted to the connector body; and
a connector interface configured to plug into a hand held external device to effect one handed measurements.
